(19) Europäisches Patentamt
European Patent Office
Office européen des brevets

(11) Veröffentlichungsnummer: **0 166 079**
**A2**

(12) **EUROPÄISCHE PATENTANMELDUNG**

(21) Anmeldenummer: **85102317.6**

(22) Anmeldetag: **01.03.85**

(51) Int. Cl.⁴: **C 02 F 11/00**, C 10 J 3/00

(30) Priorität: **27.06.84 DE 3423620**

(43) Veröffentlichungstag der Anmeldung: **02.01.86 Patentblatt 86/1**

(84) Benannte Vertragsstaaten: **AT BE CH DE FR GB IT LI LU NL SE**

(71) Anmelder: **Uhde GmbH, Friedrich-Uhde-Strasse 15 Postfach 262, D-4600 Dortmund 1 (DE)**

(72) Erfinder: **Bässler, Jürgen, Dipl.-Ing., Stuchteystrasse 19, D-4600 Dortmund (DE)**
Erfinder: **Steuber, Heinrich, Dipl.-Ing., Friedrich-Ebert-Strasse 7, D-4600 Dortmund 30 (DE)**
Erfinder: **Liebig, Winfried, Dipl.-Ing., Dullrodt 22, D-5860 Iserlohn (DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1 (DE)**

(54) **Verfahren zur thermischen Behandlung von kohlenstoffhaltigen Stoffen, insbesondere von Schlämmen.**

(57) Bei einem Verfahren zur thermischen Behandlung von kohlenstoffhaltigen Stoffen, insbesondere von mechanisch indirekt vorgetrockneten Schlämmen mit einer direkten Schlammtrocknung mittels Trockengas soll die Entfernung der im Klärschlamm enthaltenden Schadstoffe vereinfacht werden, gleichzeitig eine Energierückgewinnung erreichbar und eine Wirkungsgradverbesserung des gesamten Verfahrens erzielbar sein. Dies wird dadurch erreicht, daß das Trockengas zur direkten Schlammtrocknung aus einer partiellen Oxydation des direkt getrockneten Schlammes gewonnen wird.

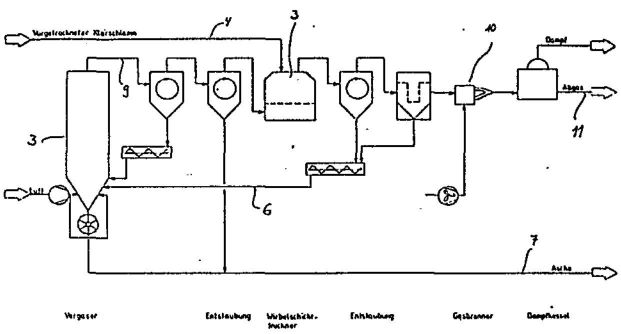


EP 0 166 079 A2

"Verfahren zur thermischen Behandlung von kohlenstoffhaltigen Stoffen, insbesondere von Schlämmen"

Die Erfindung richtet sich auf ein Verfahren zur thermischen Behandlung von kohlenstoffhaltigen Stoffen, insbesondere von mechanisch indirekt vorgetrockneten Schlämmen mit einer direkten Schlammtrocknung mittels Trockengas.

Aus der Zeitschrift "cav", Mai 1984, Seite 50 und 146 ist eine Verfahrensweise bekannt, bei der mechanisch vorentwässerter Klärschlamm zunächst in einer Wirbelschicht getrocknet und anschließend verbrannt wird. Nachteilig an dem bekannten Verfahren ist insbesondere, daß der getrocknete Schlamm mit einem Staubbrenner einstufig verbrannt wird. Damit liegen die Schadstoffe $SO_2$, $NO_x$, Staub- und Schwermetalle in einer relativ großen Rauchgasmenge vor, aus der sie abgeschieden werden müssen. Auch wird die gesamte Aschenmenge in den Rauchgasstrom eingetragen. Ein weiterer Nachteil bei der bekannten Verfahrensweise besteht darin, daß bei der Trocknung von Klärschlamm mit heißem Rauchgas sich geruchsintensive Stoffe bilden, die entweder eine Nachverbrennung oder eine aufwendige Gasreinigung erfordern. Bei einer Nachverbrennung ergeben sich energetisch erhebliche Nachteile.

Aufgabe der Erfindung ist die Schaffung einer Lösung, mit der die oben beschriebenen Nachteile vermieden werden,

insbesondere aber eine einfache Entfernung der im Klärschlamm enthaltenden Schadstoffe möglich ist und eine Energierückgewinnung erreichbar und damit ein besserer Wirkungsgrad der gesamten Verfahrensweise erzielbar ist.

Mit einem Verfahren der eingangs bezeichneten Art wird diese Aufgabe gemäß der Erfindung dadurch gelöst, daß das Trockengas für die direkte Schlammtrocknung aus einer partiellen Oxydation des direkt getrockneten Schlammes gewonnen wird.

Dadurch, daß die partielle Oxydation so gesteuert werden kann, daß einerseits noch ein brennfähiges Gas entsteht, andererseits aber die Schlammtrocknung möglichst klein gehalten wird, ist es sehr viel leichter die Schadstoffe, die sich im Klärschlamm befinden, aus den Abgasen zu entfernen, da durch diese Verfahrensweise die entstehende Gasmenge nur etwa der Hälfte der Endmenge entspricht, falls mit Luft vergast wird. Untersuchungen haben gezeigt, daß sich diese Gasmenge auf ca. 1/4 der Endmenge reduzieren läßt, wenn beispielsweise die Vergasung mit Sauerstoff durchgeführt wird.

In Ausgestaltung sieht die Erfindung vor, daß der Schlamm zur direkten Trocknung einem Trockner, insbesondere einem Wirbelschichttrockner, und anschließend zur Vergasung einem Vergaser zugeführt wird, wobei das im Vergaser entstehende Gas als Trockengas dem Tockner zugeführt wird. Es sei an dieser Stelle bemerkt, daß der Wirbelschichttrockner bzw. das Trocknen in einer Wirbelschicht für sich gesehen aus dem gattungsbildenden Stand der Technik bekannt ist.

Die Erfindung sieht auch vor, daß das dem Vergaser verlassende Trockengas nach der Kühlung durch die Beaufschlagung des Wirbelschichttrockners anschließend gereinigt und dann nachverbrannt wird, wobei insbesondere vorgesehen sein kann, daß die Nachverbrennung des Trockengases in einem Raucherkessel erfolgt, wobei die Erfindung selbstverständlich auf diesen besonderen Kesseltyp nicht beschränkt ist.

Diese Verfahrensweise bietet zusätzlich eine Fülle von Vorteilen gegenüber dem Stand der Technik. So kann die Energierückgewinnung aufgrund der möglichen höheren Verbrennungstemperaturen mit einem sehr viel besseren Wirkungsgrad durchgeführt werden. Dabei kann beispielsweise Dampf erzeugt werden, der entweder zur Trocknung der Schlämme verwendet oder in ein Dampfnetz eingespeist wird. Natürlich kann auch alternativ eine Wärmerückgewinnung erfolgen.

Die besondere Qualität der dem Brenner zugeführten Gase ermöglicht auch den Einsatz, wie beansprucht, von einem

einfachen Rauchrohrkessel statt teurer Strahlungskessel, wie sie sonst üblich sind.

Vorteilhaft ist auch, daß durch die Zweistufigkeit der Verfahrensweise die entsprechenden Anlagen wesentlich kompakter gebaut werden können, wobei Berechnungen zeigen, daß eine einstraßige Anlage, die nach dem erfindungsgemäßen Verfahren arbeitet, die gleiche Belebtschlammmenge die drei großen Wirbelschichtöfen ohne Vortrocknung bewältigen kann. Weitere Vorteile bestehen darin, daß im Schlamm enthaltender Schwefel durch Kalkzugabe zum Teil in der Asche zurückgehalten werden kann. Auch können organische Stickstoffe Bindungen zu einem erheblichen Anteil in der ersten Stufe zu $NH_3$ zersetzt werden. Dieser Amoniak kann bei günstiger Gasbrennerausführung zum größten Teil zu $N_2$ und $H_2O$ zersetzt werden.

Schließlich können auch die Schwermetalle weitestgehend in der Asche gebunden werden. Ein weiterer erheblicher Vorteil der vorliegenden Erfindung.

Die Erfindung ist nachstehend anhand einer Prinzipskizze (Fig. 1) sowie anhand eines Blockschaltbildes (Fig. 2) näher erläutert.

In Fig. 1 tritt, angedeutet durch den Pfeil 1, der Schlamm in eine indirekte Trocknung 2 ein. Der so vorgetrocknete

Schlamm wird einer direkten Trocknung 3, z.B. einem Wirbelschichttrockner, zugeführt, was mit dem Pfeil 4 angedeutet ist. Der die direkte Trocknung 3 verlassende Schlamm wird dann einer Vergasung 5 zugeführt. Der entsprechende Pfeil ist mit 6 bezeichnet. Der Pfeil 7 bezeichnet den Ascheaustritt aus dem Vergaser 5.

Das im Vergaser 5 entstehende Rohgas tritt über den punktiert dargestellten Weg 8 zur direkten Trocknung der Schlämme in den Trockner 3 ein, verläßt den Trockner 3 über den Weg 9, und beaufschlagt eine Nachverbrennung bzw. Dampferzeugungsanlage 10. Mit 11 ist der Austritt der Abgase bezeichnet.

Vereinfacht seien die folgenden Mengen und Temperaturen an den einzelnen bezifferten Punkten angegeben :

Bei 1 : Schlamm, G = 6.000 Kilo TS/h
$H_2O$ = 34.000 Kilo/ht = 70°C.

Bei 4 : Schlamm vorgetrocknet, G = 6.000 Kilo/h
$H_2O$ = 7.500 kg/h

Bei 6 : Trockenschlamm, G = 6.000 Kilo/h
$H_2O$ = 1.500 Kilo/h

Bei 8: Rohgas, G = 19.200 Kilo/h, t = 900°C

Bei 9: Rohgas + Dampf, G = 25.200/h, t = 200°C

Bei 11 : Rauchgas, G = 52.500 Kilo/h, t = 200°C

In Fig. 2 ist ein Blockschaltbild wiedergegeben, wobei die einzelnen Stationen direkt bezeichnet sind. Die der Fig. 1 entsprechenden Anlagenpunkte sind mit den gleichen Bezugsziffern versehen.

Natürlich ist das beschriebene Ausführungsbeispiel der Erfindung in vielfacher Hinsicht abzuändern, ohne den Grundgedanken der Erfindung zu verlassen. So ist die Erfindung weder auf eine bestimmte Schlammart eingeschränkt noch auf einen bestimmten Trockner oder einem Brenner zur Nachverbrennung der Abgase, noch ein spezifischer Wärmeerzeuger. So kann z.B. neben dem Wirbelschichttrockner ein Sprühtrockner, Drehrohrtrockner o. dgl. vorgesehen sein u. dgl. mehr.

Patentansprüche:

1. Verfahren zur thermischen Behandlung von kohlenstoffhaltigen Stoffen, insbesondere von mechanisch indirekt vorgetrockneten Schlämmen mit einer direkten Schlammtrocknung mittels Trockengas,
dadurch gekennzeichnet,
daß das Trockengas aus einer partiellen Oxydation des direkt getrockneten Schlammes gewonnen wird.

2. Verfahren nach Anspruch 1,
dadurch gekennzeichnet,
daß der Schlamm zur Trocknung einem Trockner, insbesondere einem Wirbelschichttrockner und anschließend zur Vergasung einem Vergaser zugeführt wird, wobei das im Vergaser entstehende Gas als Trockengas dem Trockner zugeführt wird.

3. Verfahren nach einem der vorangehenden Ansprüche,
dadurch gekennzeichnet,
daß das den Vergaser verlassende Trockengas nach der Kühlung durch die Beaufschlagung des Wirbelschichttrockners anschließend gereinigt und dann nachverbrannt wird.

4. Verfahren nach Anspruch 3,
dadurch gekennzeichnet,

daß die Nachverbrennung des Trockengases in einem Rauchrohrkessel erfolgt.

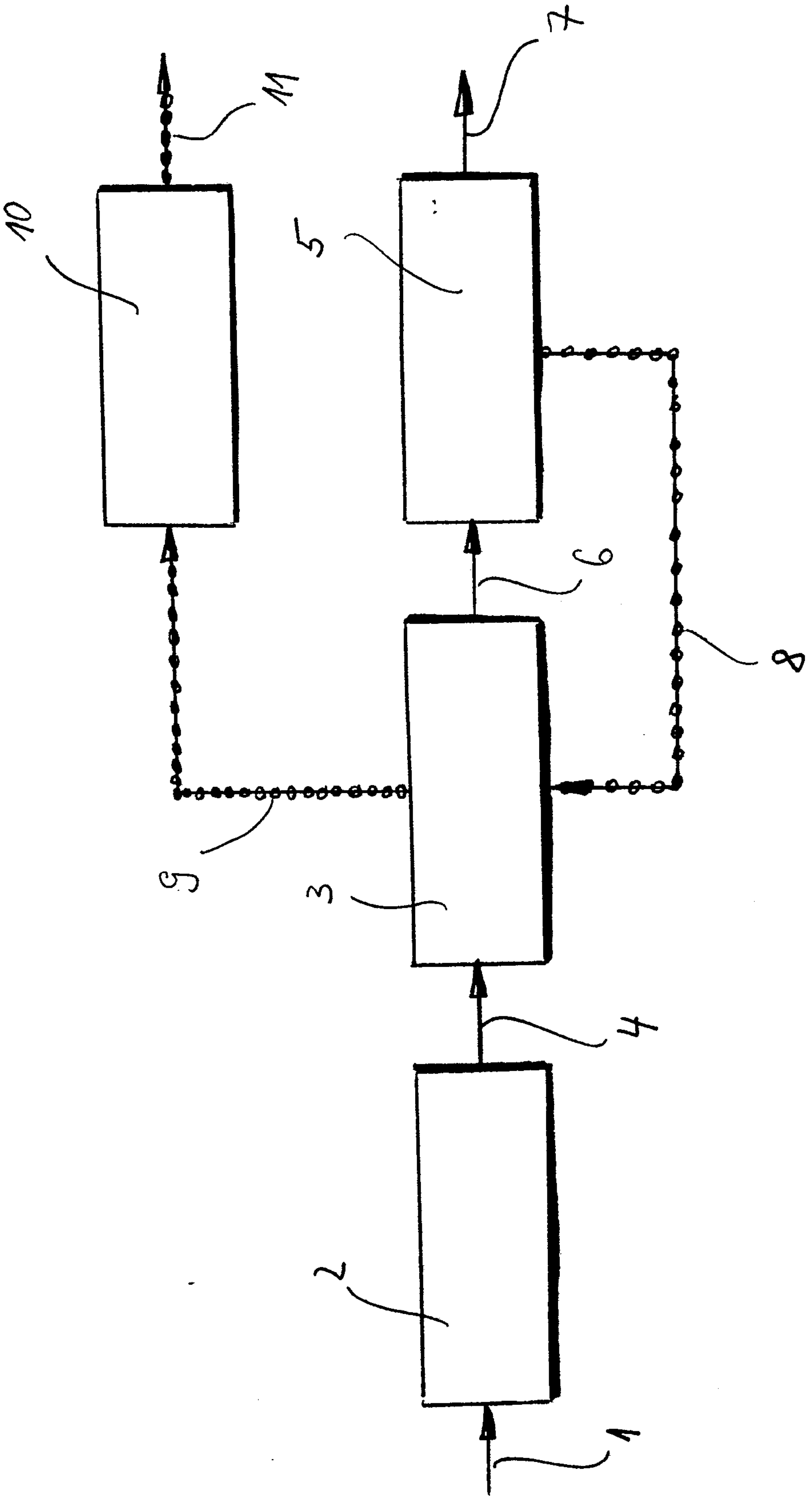


Fig. 1

0166079

2/2

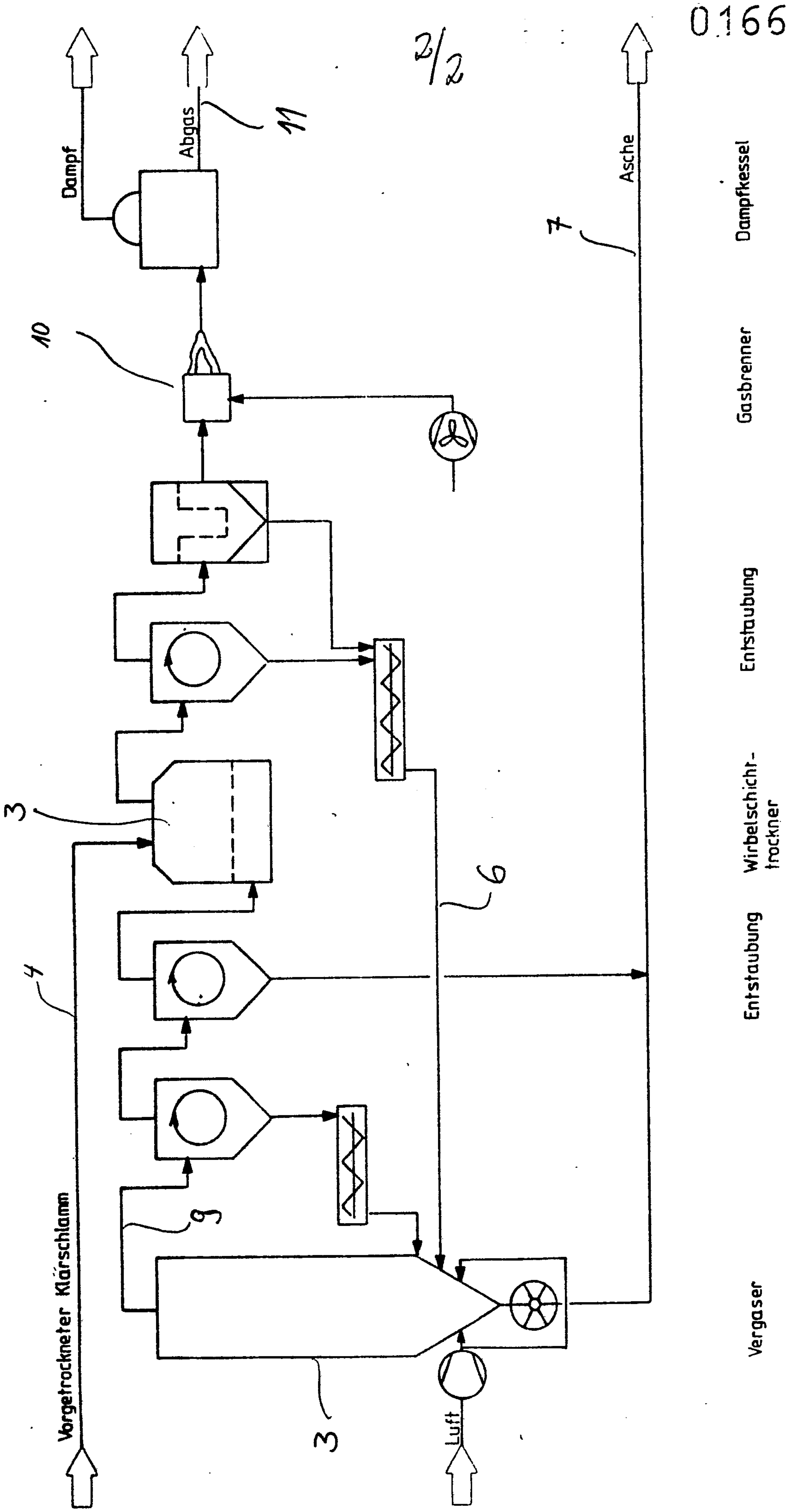


Fig. 2